# EUROPEAN PATENT APPLICATION

(11) **EP 2 500 694 A2**
(43) Date of publication of application: **19.09.2012**
(21) Application number: 12159595.3
(22) Date of filing: 15.03.2012
(51) Int. Cl.: G01D 5/14

(54) **Rotational position detecting device and transmission actuating device equipped with the same**

(30) Priority: 18.03.2011 JP 2011061042
(71) Applicant: JTEKT Corporation, Osaka-shi, Osaka 542-8502 (JP)
(72) Inventor: Uemoto, Takafumi, Osaka 542-8502 (JP)
(74) Representative: TBK

(57) **Abstract**

The rotational position of a shift select shaft is detected by a resolver. The resolver includes a substantially cylindrical resolver rotor (201;301) that is fixedly fitted to the outer periphery of the shift select shaft (15), and an annular resolver stator (202) that is arranged so as to surround the resolver rotor. The resolver rotor and the resolver stator are arranged so as to be concentric with the shift select shaft. Regardless of which of first, second third select positions the shift select shaft is placed at, the entirety of the inner periphery of the resolver stator radially faces the outer periphery of the resolver rotor.

## Description

### BACKGROUND OF THE INVENTION

### 1. Field of the Invention

The invention relates to a rotational position detecting device that detects the rotational position of a shift select shaft, and a transmission actuating device equipped with the rotational position detecting device.

### 2. Description of Related Art

There is a conventional automated manual transmission that is similar in configuration to a manual transmission but that automatically performs gear shifts. Such a transmission includes a shift select shaft for shift operation. The shift select shaft is provided so as to be rotatable and axially movable among a plurality of select positions. The shift select shaft is moved in the axial direction so that the axial position thereof is changed among the plurality of select positions. Thus, the transmission performs select operation. In addition, by rotating the shift select shaft at each select position, the transmission performs shift operation (see Japanese Patent Application Publication No. 2002-131048 (JP 2002-131048 A).

In order to appropriately control rotation of the shift select shaft, it is necessary to detect the rotational position of the shift select shaft with high accuracy. The shift select shaft is provided so as to be rotatable at any select positions. It is desirable to detect the rotational position of the shift select shaft with high accuracy regardless of which of the select positions the shift select shaft is placed at. The inventor of the present application has considered detecting the rotational position of the above-described shift select shaft using, for example, a gear sensor. Specifically, a first gear is spline-fitted to the outer periphery of the shift select shaft, and a gear sensor having a second gear is arranged such that the first and second gears are in mesh with each other. Then, the rotational position of the second gear that rotates as the shift select shaft rotates is measured to thereby detect the rotational position of the shift select shaft.

However, in the above-described rotational position detection, the following inconvenience may be caused. A backlash occurs between the shift select shaft and the first gear that is spline-fitted to the shift select shaft. Furthermore, a backlash occurs also between the first gear and the second gear of the gear sensor. Therefore, it is not possible to detect the rotational position of the shift select shaft with high accuracy. Accordingly, it is difficult to perform shift operation of the transmission with high accuracy.

### SUMMARY OF THE INVENTION

An object of the invention is to provide a rotational position detecting device that is able to detect the rotational position of a shift select shaft with high accuracy, and a transmission actuating device that allows a transmission to perform shift operation with high accuracy.

A first aspect of the invention relates to a rotational position detecting device that detects a rotational position of a shift select shaft that has an axis, that rotates about the axis to perform shift operation and that moves, in an axial direction of the shift select shaft, between a plurality of select positions to perform select operation. The rotational position detecting device includes: an annular detection rotor that is fixedly fitted to an outer periphery of the shift select shaft; and a detecting unit that is fixedly held by a fixing member, at a position on a radially outer side of the detection rotor. One of the detection rotor and the detecting unit is formed so as to be long along the axial direction of the shift select shaft such that the detection rotor and the detecting unit overlap with each other in a direction perpendicular to the axis regardless of which of the select positions the shift select shaft is placed at. An angle of rotation of the detection rotor, overlapping with the detecting unit in the direction perpendicular to the axis, relative to the detecting unit is detected.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an exploded perspective view of the schematic configuration of a transmission apparatus in which a rotational position detecting device according to a first embodiment of the invention is incorporated;
FIG. 2 is a sectional view that shows the configuration of an electric actuator shown in FIG. 1;
FIG. 3 is a sectional view taken along the line III-III in FIG. 2;
FIG. 4 is a view that shows the configuration of a resolver rotor when viewed in the direction indicated by the arrow IV in FIG. 3;
FIG. 5A to FIG. 5C are sectional views that schematically show the positional relationship between the resolver rotor and a resolver stator;
FIG. 6 is a sectional view that shows the configuration of main portions of a transmission apparatus in which a rotational position detecting device according to a second embodiment of the invention is incorporated; and
FIG. 7 is a view that schematically shows the configuration of a main portion of a magnetic encoder device shown in FIG. 6.

### DETAILED DESCRIPTION OF EMBODIMENTS

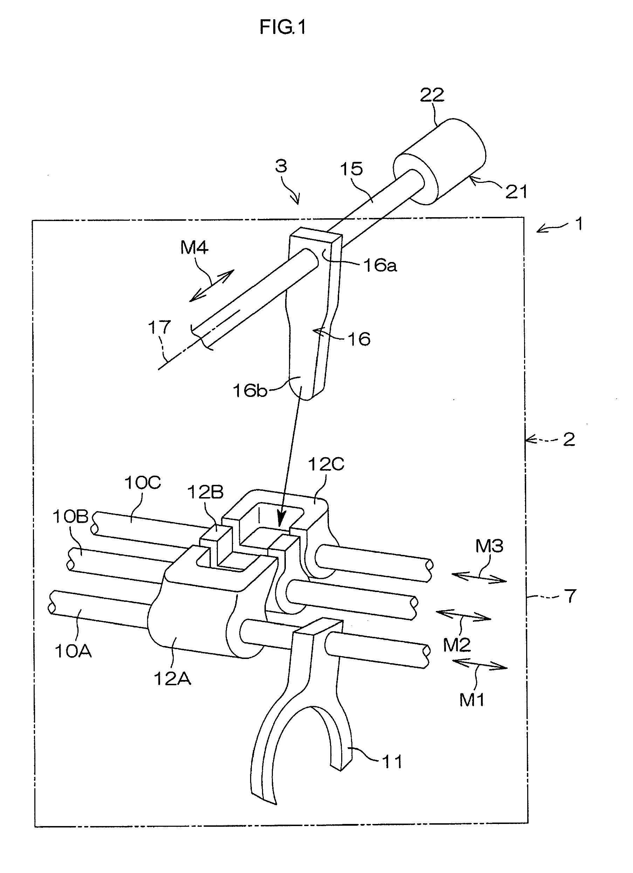

Hereinafter, embodiments of the invention will be described in detail with reference to the accompanying drawings. FIG. 1 is an exploded perspective view of the schematic configuration of a transmission apparatus 1 in which a rotational position detecting device according to a first embodiment of the invention is incorporated. The transmission apparatus 1 includes a transmission 2 and a transmission actuating device 3. The transmission actuating device 3 actuates the transmission 2 to shift gears.

The transmission 2 is a known constant-mesh parallel-shaft transmission, and is mounted on a vehicle, such as a passenger vehicle and a truck. The transmission 2 includes a gear housing 7 and a constant-mesh parallel-shaft transmission mechanism (not shown). The parallel-shaft transmission mechanism is accommodated in the gear housing 7. The transmission actuating device 3 includes a shift select shaft 15 and an electric actuator 21. The shift select shaft 15 causes the transmission mechanism to perform shift operation or select operation. The electric actuator 21 is used as a common driving source for actuating the shift select shaft 15 to perform shift operation or select operation.

A first end 16a of an internal lever 16 is fixed to an intermediate portion of the shift select shaft 15. The internal lever 16 is accommodated in the gear housing 7. The internal lever 16 rotates together with the shift select shaft 15 about an axis 17 of the shift select shaft 15. One end portion (upper right portion shown in FIG. 1) of the shift select shaft 15 protrudes out of the gear housing 7. Multiple shift rods, that is, shift rods 10A, 10B and 10C, are accommodated in the gear housing 7. The shift rods 10A, 10B and 10C extend parallel to one another. Shift blocks 12A, 12B and 12C are respectively fixed to the shift rods 10A, 10B and 10C. The shift blocks 12A, 12B and 12C are engageable with a second end 16b of the internal lever 16. In addition, the shift rods 10A, 10B and 10C are each provided with a shift fork 11 engageable with a clutch sleeve (not shown). Note that only the shift fork 11 fitted to the shift rod 10A is shown in FIG. 1.

As the shift select shaft 15 is moved by the electric actuator 21 in the axial direction M4, the internal lever 16 is moved in the axial direction M4. When the shift select shaft 15 is at a predetermined first select position (not shown), the second end 16b of the internal lever 16 engages with, for example, the shift block 12A. When the shift select shaft 15 is at a second select position (not shown), the second end 16b of the internal lever 16 engages with, for example, the shift block 12B. Furthermore, when the shift select shaft 15 is at a third select position (not shown), the second end 16b of the internal lever 16 engages with, for example, the shift block 12C. That is, as the shift select shaft 15 is moved in the axial direction M4, the axial position of the shift select shaft 15 is changed among the first, second and third select positions. Thus, the second end 16b of the internal lever 16 engages with a selected one of the shift blocks 12A, 12B and 12C. In this way, the select operation is accomplished.

As the shift select shaft 15 is rotated by the electric actuator 21 about its axis 17, the internal lever 16 pivots about the axis 17. As a result, one of the shift blocks 12A, 12B and 12C, which is engaged with the internal lever 16, moves in a corresponding one of the axial directions M1, M2 and M3 of the shift rods 10A, 10B and 10C. In this way, shift operation is accomplished.

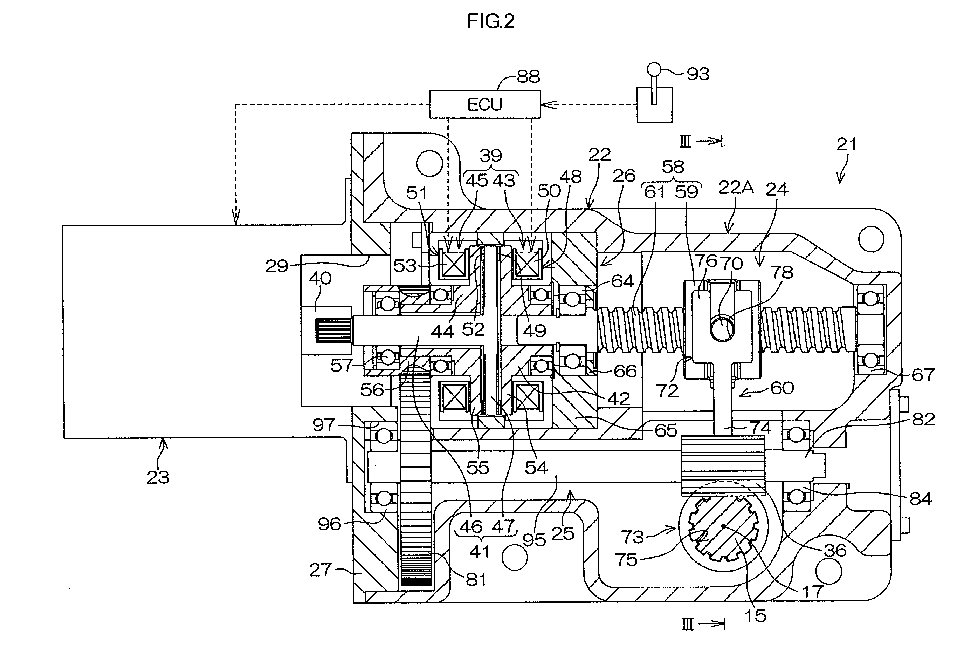

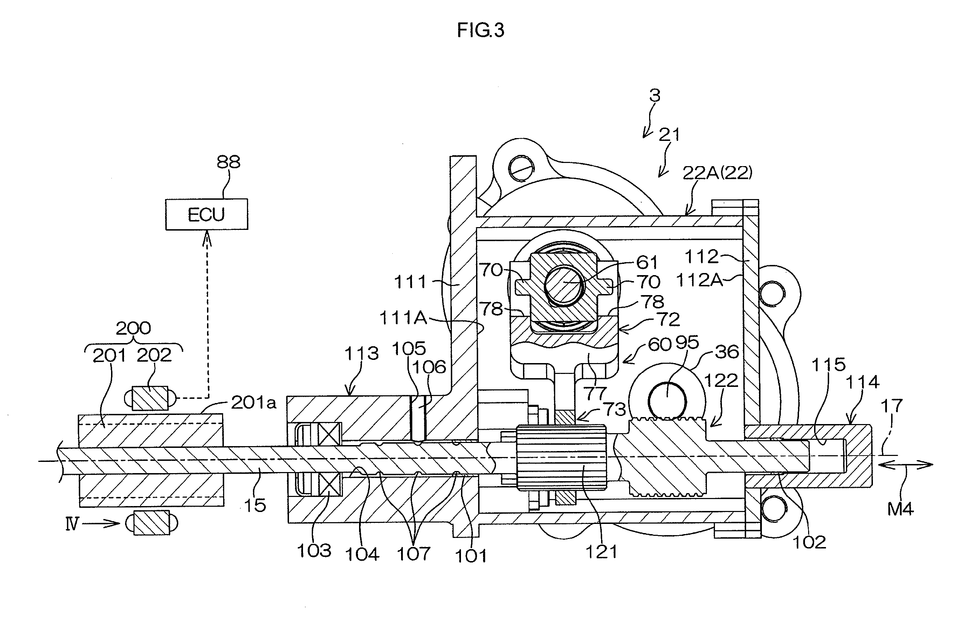

The electric actuator 21 includes a substantially cylindrical closed-end housing 22. The electric actuator 21 is fixed to the outer surface of the gear housing 7 or a predetermined portion of the vehicle. FIG. 2 is a sectional view that shows the configuration of the electric actuator 21. FIG. 3 is a sectional view taken along the line III-III in FIG. 2. The electric actuator 21 includes an electric motor 23, a shift conversion mechanism 24, a select conversion mechanism 25 and a change unit 26. The electric motor 23 is, for example, a brushless motor. The shift conversion mechanism 24 converts the rotary torque of the electric motor 23 into a force that rotates the shift select shaft 15 about the axis 17. The select conversion mechanism 25 converts the rotary torque of the electric motor 23 into a force that moves the shift select shaft 15 in its axial direction M4 (direction perpendicular to the sheet on which FIG. 2 is drawn, and transverse direction in FIG. 3). The change unit 26 changes the destination, to which the rotary driving force of the electric motor 23 is transmitted, between the shift conversion mechanism 24 and the select conversion mechanism 25. The electric motor 23, the shift conversion mechanism 24, the select conversion mechanism 25 and the change unit 26 are accommodated in the housing 22.

An opening portion (left side in FIG. 2) of the housing 22 is closed by a substantially plate-shaped lid 27. The housing 22 and the lid 27 each are made of a metal material, such as cast iron and aluminum, and the outer periphery of the lid 27 is fitted in the opening portion of the housing 22. The lid 27 has a circular through-hole 29 that extends from the inner surface (right surface shown in FIG. 2) to the outer surface (left surface shown in FIG. 2).

The housing 22 has a substantially box-shaped main housing 22A that mainly accommodates the distal end-side region of the shift select shaft 15 and components of the shift conversion mechanism 24. The main housing 22A has a first side wall 111 (see FIG. 3), a second side wall 112 (see FIG. 3), a first shaft holder 113 (see FIG. 3) and a second shaft holder 114 (see FIG. 3). The first shaft holder 113 supports a portion of the shift select shaft 15, which is slightly closer to the base end than the distal end portion is. The second shaft holder 114 accommodates and supports the distal end portion of the shift select shaft 15.

The inner side surface of the first side wall 111 is a first inner wall surface 111A (see FIG. 3) that is a flat surface. The inner side surface of the second side wall 112 is a second inner wall surface 112A (see FIG. 3) that is a flat surface. The second inner wall surface 112A faces the first inner wall surface 111A, and is formed parallel to the first inner wall surface 111A.

The first shaft holder 113 is formed so as to protrude outward from the outer wall surface (the surface on the opposite side of the first side wall 111 from the first inner wall surface 111A) of the first side wall 111, and is formed in, for example, a cylindrical shape. The first shaft holder 113 is integrally formed with the first side wall 111. An insertion hole 104, having a circular cross section, is formed in the first shaft holder 113 and the first side wall 111. The insertion hole 104 extends through the first shaft holder 113 and the first side wall 111 in their thickness direction (transverse direction in FIG. 3). The shift select shaft 15 passes through the insertion hole 104.

A first plain bearing 101 (see FIG. 3) is fixedly fitted to the inner peripheral wall of the first shaft holder 113, which defines the insertion hole 104. The first plain bearing 101 surrounds the outer periphery of the intermediate portion of the shift select shaft 15 (the intermediate portion is slightly closer to the base end than the distal end portion is) that passes through the insertion hole 104, and supports the outer periphery of the intermediate portion of the shift select shaft 15 such that the intermediate portion is slidable with respect to first plain bearing 101. The second shaft holder 114 is formed so as to protrude outward from the outer wall surface (the surface on the opposite side of the second wall 112 from the second inner wall surface 112A) of the second side wall 112, and is formed in, for example, a substantially cylindrical shape. The second shaft holder 114 is integrally formed with the second side wall 112. An accommodating groove 115 having a circular cross section (see FIG. 3) is defined by the inner peripheral surface and bottom surface of the second shaft holder 114. The accommodating groove 115 accommodates the distal end portion (right end portion in FIG. 3) of the shift select shaft 15. The inner peripheral wall of the second shaft holder 114, which defines the accommodating groove 115, is formed in a cylindrical shape that is coaxial with the insertion hole 104.

A second plain bearing 102 (see FIG. 3) is fixedly fitted to the inner peripheral wall of the second shaft holder 114. The second plain bearing 102 surrounds the outer periphery of the distal end portion of the shift select shaft 15 accommodated in the accommodating groove 115, and supports the outer periphery of the distal end portion such that distal end portion is slidable with respect to the second plain bearing 102. The shift select shaft 15 is supported by these first and second plain bearings 101 and 102 so as to be rotatable about its axis 17 and movable in the axial direction M4.

A seal member 103 is provided in the insertion hole 104 at a position on the axially outer side of the first plain bearing 101 to seal the gap between the outer periphery of the shift select shaft 15 and the inner peripheral wall of the first shaft holder 113 such that dust or dirt does not enter the housing 22 (main housing 22A). A lock pole 106 is arranged in the first shaft holder 113 at a position between the seal member 103 and the first plain bearing 101 in the thickness direction (transverse direction in FIG. 3). Specifically, the lock pole 106 is accommodated in a through-hole 105 that extends through the first shaft holder 113 from the inner peripheral wall to the outer peripheral surface of the first shaft holder 113. The lock pole 106 extends in the direction perpendicular to the axis of the accommodating groove 115 (that is, the axis 17 of the shift select shaft 15) (perpendicular direction), has a substantially columnar shape, and is provided so as to be movable along this direction (perpendicular direction). An end portion of the lock pole 106 has a semi-spherical shape, and engages with one of engaging grooves 107 described below.

The multiple (for example, three) engaging grooves 107 that extend in the circumferential direction are formed on the outer periphery of the shift select shaft 15 at intervals in the axial direction M4. Each engaging groove 107 is formed along the whole circumference of the shift select shaft 15. As the lock pole 106 moves in its longitudinal direction, the end portion protrudes toward the axis 17 (downward in FIG. 3) beyond the inner peripheral wall of the first shaft holder 113 to engage with one of the engaging grooves 107 to thereby block movement of the shift select shaft 15 in the axial direction M4. Thus, the shift select shaft 15 is held with a constant force with its movement in the axial direction M4 blocked.

In a region of the outer periphery of the shift select shaft 15 between a portion that slidably contacts the first plain bearing 101 and a portion that slidably contacts the second plain bearing 102, an external spline portion 121 (see FIG. 3) and a rack portion 122 (described later) (see FIG. 3) are formed in this order from the first plain bearing 101-side. A pinion 36 is in mesh with the rack portion 122. As shown in FIG 2, for example, a brushless motor is employed as the electric motor 23. The electric motor 23 is mounted such that a body casing of the electric motor 23 is exposed on the outside of the housing 22. An output shaft 40 of the electric motor 23 extends along a predetermined direction (transverse direction in FIG. 2) perpendicular to the shift select shaft 15.

The change unit 26 includes a first transmission shaft 41, a first rotor 42, a second rotor 44 and a clutch mechanism 39. The first transmission shaft 41 is coaxially coupled to the output shaft 40 of the electric motor 23. The first rotor 42 is provided coaxially with the first transmission shaft 41 so as to be rotatable together with the first transmission shaft 41. The second rotor 44 is provided coaxially with the first transmission shaft 41 so as to be rotatable together with the first transmission shaft 41. The clutch mechanism 39 changes the rotor to which the first transmission shaft 41 is coupled, between the first rotor 42 and the second rotor 44.

The first transmission shaft 41 has a small-diameter main shaft portion 46 and a large-diameter portion 47. The main shaft portion 46 is provided on the electric motor 23-side. The large-diameter portion 47 is provided integrally with the main shaft portion 46, at an axial end portion (right end portion in FIG. 2) on the first rotor 42-side, of the main shaft portion 46, and is larger in diameter than the main shaft portion 46. The first rotor 42 is arranged on the opposite side of the first transmission shaft 41 from the electric motor 23. The first rotor 42 has a first armature hub 54. The first armature hub 54 projects radially outward from the outer periphery of an axial end portion (left end portion in FIG. 2) on the electric motor 23-side, of the first rotor 42. The first armature hub 54 is arranged so as to face the surface (right surface in FIG. 2) of the large-diameter portion 47, the surface being on the opposite side of the large-diameter portion 47 from the electric motor 23.

The second rotor 44 is arranged on the opposite side of the large-diameter portion 47 of the first transmission shaft 41 from the first rotor 42, that is, on the electric motor 23-side. The second rotor 44 surrounds the main shaft portion 46 of the first transmission shaft 41. The second rotor 44 has a second armature hub 55. The second armature hub 55 projects radially outward from the outer periphery of an axial end portion (right end portion in FIG. 2) of the second rotor 44, the axial end portion being on the opposite side of the second rotor 44 from the electric motor 23. The second armature hub 55 is arranged so as to face the surface (left surface in FIG. 2) on the electric motor 23-side, of the large-diameter portion 47. In other words, (the first armature hub 54 of) the first rotor 42 and (the second armature hub 55 of) the second rotor 44 are arranged so as to sandwich the large-diameter portion 47 of the first transmission shaft 41.

The clutch mechanism 39 includes a first electromagnetic clutch 43 and a second electromagnetic clutch 45. The first electromagnetic clutch 43 is connected to the first rotor 42 to connect the first rotor 42 to the first transmission shaft 41, or is disconnected from the first rotor 42 to disconnect the first rotor 42 from the first transmission shaft 41. The second electromagnetic clutch 45 is connected to the second rotor 44 to connect the second rotor 44 to the first transmission shaft 41, or is disconnected from the second rotor 44 to disconnect the second rotor 44 from the first transmission shaft 41. The first electromagnetic clutch 43 includes a first field 48 and a first armature 49. The first armature 49 is arranged on the first axial side surface (right surface in FIG. 2) of the large-diameter portion 47 of the first transmission shaft 41 with a minute gap left between the first armature 49 and the surface of the first armature hub 54, which is on the electric motor 23-side (left surface in FIG. 2), and has a substantially annular plate shape. The first armature 49 is made of a ferromagnetic material, such as iron. The first field 48 is formed by incorporating a first electromagnetic coil 50 in a yoke, and is fixed to the housing 22.

The second electromagnetic clutch 45 includes a second field 51 and a second armature 52. The second armature 52 is arranged on the second axial side surface (left surface in FIG. 2) of the large-diameter portion 47 of the first transmission shaft 41 with a minute gap left between the second armature 52 and the surface of the second armature hub 55, the surface being on the opposite side of the second armature hub 55 from the electric motor 23 (right surface in FIG. 2), and has a substantially annular plate shape. The second armature 52 is made of a ferromagnetic material, such as iron. The second field 51 is formed by incorporating a second electromagnetic coil 53 in a yoke, and is fixed to the housing 22. The first field 48 and the second field 51 are arranged along the axial direction so as to sandwich the large-diameter portion 47, the first armature hub 54 and the second armature hub 55.

When the first electromagnetic coil 50 is energized, the first electromagnetic coil 50 enters an excited state, and an electromagnetic attraction force is generated in the first field 48 that includes the first electromagnetic coil 50. Then, the first armature 49 is attracted toward the first field 48 to be deformed toward the first field 48, and the first armature 49 frictionally contacts the first armature hub 54. Thus, when the first electromagnetic coil 50 is energized with the second electromagnetic coil 53 de-energized, the first armature 49 is connected to the first rotor 42, and the first transmission shaft 41 is coupled to the first rotor 42.

On the other hand, when the second electromagnetic coil 53 is energized, the second electromagnetic coil 53 enters an excited state, and an electromagnetic attraction force is generated in the second field 51 that includes the second electromagnetic coil 53. Then, the second armature 52 is attracted toward the second field 51 to be deformed toward the second field 51, and the second armature 52 frictionally contacts the second armature hub 55. Thus, when the second electromagnetic coil 53 is energized with the first electromagnetic coil 50 de-energized, the second armature 52 is connected to the second rotor 44, and the first transmission shaft 41 is coupled to the second rotor 44.

That is, the clutch mechanism 39 selectively changes the state of the first transmission shaft 41, between the state where the first transmission shaft 41 is coupled to the first rotor 42 and the state where the first transmission shaft 41 is coupled to the second rotor 44. In the state where the first transmission shaft 41 is coupled to the first rotor 42, the first transmission shaft 41 is disconnected from the second rotor 44. In the state where the first transmission shaft 41 is coupled to the second rotor 44, the first transmission shaft 41 is disconnected from the first rotor 42.

An annular small-diameter first gear 56 is fixedly fitted to the outer periphery of the second rotor 44. The first gear 56 is provided coaxially with the second rotor 44. The first gear 56 is supported by a rolling bearing 57. An outer ring of the rolling bearing 57 is fixedly fitted to the inner side of the first gear 56. An inner ring of the rolling bearing 57 is fixedly fitted to the outer periphery of the main shaft portion 46 of the first transmission shaft 41. The shift conversion mechanism 24 includes a ball screw mechanism 58 and an arm 60. The ball screw mechanism 58 converts rotational motion to linear motion. The arm 60 pivots about the axis 17 of the shift select shaft 15 as the nut 59 of the ball screw mechanism 58 moves in the axial direction.

The ball screw mechanism 58 includes a screw shaft 61 and the nut 59. The screw shaft 61 extends coaxially with the first rotor 42 (or coaxially with the first transmission shaft 41). The nut 59 is screwed to the screw shaft 61 via balls (not shown). The screw shaft 61 and the shift select shaft 15 are neither parallel to each other nor intersecting with each other, and staggered at a stagger angle of 90°. The screw shaft 61 is supported by a rolling bearing 64 while movement of the screw shaft 61 in the axial direction is restricted. Specifically, one end portion (left end portion in FIG. 2) of the screw shaft 61 is supported by the rolling bearing 64. An inner ring of the rolling bearing 64 is fixedly fitted to the one end portion of the screw shaft 61. In addition, an outer ring of the rolling bearing 64 is fitted in a through-hole that extends through a bottom wall 65 of a casing of the change unit 26 fixed to the housing 22. The through-hole extends from the inner surface to the outer surface of the bottom wall 65. In addition, a lock nut 66 is engaged with the outer ring of the rolling bearing 64 to restrict movement of the screw shaft 61 toward the first side (right side in FIG. 2) in the axial direction. A portion of the one end portion of the screw shaft 61, which is closer to the electric motor 23 than the rolling bearing 64 is (a portion of the one end portion of the screw shaft 61, which is on the left side of the rolling bearing 64), passes through a hole defined by the inner periphery of the first rotor 42, and is coupled to the first rotor 42 so as to be rotatable integrally with the first rotor 42. The other end portion (right end portion in FIG. 2) of the screw shaft 61 is supported by a rolling bearing 67. An outer ring of the rolling bearing 67 is fixed to the housing 22.

Columnar protruding shafts 70 (only one of them is shown in FIG. 2. See FIG. 3 as well) are respectively formed to protrude from one side surface (side surface shown in FIG. 2, and left side surface in FIG. 3) of the nut 59 and the other side surface (side surface not shown in FIG. 2, and right side surface in FIG. 3), which is on the opposite side of the nut 59 from the one side surface. The protruding shafts 70 each extends in the direction along the axial direction M4 of the shift select shaft 15 (direction perpendicular to the sheet on which FIG. 2 is drawn, and transverse direction in FIG. 3). The paired protruding shafts 70 are coaxial with each other. Rotation of the nut 59 around the screw shaft 61 is restricted by the first engaging portion 72 of the arm 60. Thus, the nut 59 moves in the axial direction of the screw shaft 61 as the screw shaft 61 rotates.

The arm 60 has the first engaging portion 72, a second engaging portion 73 (see FIG. 3) and a linear connecting rod 74. The first engaging portion 72 engages with the nut 59. The second engaging portion 73 engages with the shift select shaft 15. The connecting rod 74 connects the first engaging portion 72 to the second engaging portion 73. The second engaging portion 73 has a substantially cylindrical shape, and is fitted to the outer periphery of the shift select shaft 15. The first engaging portion 72 has a pair of support plates 76 and a coupling plate 77, and has a substantially U-shape in side view. The support plates 76 face each other. The coupling plate 77 couples the base end sides (lower end sides shown in FIG. 2 and FIG. 3) of the support plates 76 to each other. Each support plate 76 has a U-shaped engaging groove 78 that engages with the outer periphery of a corresponding one of the protruding shafts 70 while allowing rotation of the protruding shaft 70. Each U-shaped engaging groove 78 is a cutout that is formed in each support plate 76 from the distal end side that is on the opposite side of the support plate 76 from the base end side. Therefore, the first engaging portion 72 is engaged with the nut 59 so as to be rotatable relative to the nut 59 around the protruding shafts 70 and movable together with the nut 59 in the axial direction of the screw shaft 61.

In addition, due to engagement between each U-shaped engaging groove 78 and a corresponding one of the protruding shafts 70, rotation of the nut 59 around the screw shaft 61 is restricted by the first engaging portion 72 of the arm 60. Thus, as the screw shaft 61 rotates, the nut 59 and the first engaging portion 72 move in the axial direction of the screw shaft 61. The shift select shaft 15 is spline-fitted to the second engaging portion 73. Specifically, the external spline portion 121 formed on the outer periphery of the shift select shaft 15 is in mesh with an internal spline 75 formed on the inner periphery of the second engaging portion 73. In other words, the second engaging portion 73 is coupled to the outer periphery of the shift select shaft 15 so as to be non-rotatable relative to the shift select shaft 15 but axially movable relative to the shift select shaft 15. Thus, as the screw shaft 61 rotates and, accordingly, the nut 59 moves in the axial direction of the screw shaft 61, the arm 60 pivots about the axis 17 of the shift select shaft 15, and the shift select shaft 15 rotates as the arm 60 pivots about the axis 17.

The select conversion mechanism 25 includes the first gear 56, a second transmission shaft 95, a second gear 81 and the small-diameter pinion 36. The second transmission shaft 95 extends parallel to the first transmission shaft 41, and is rotatably provided. The second gear 81 is coaxially fixed to the second transmission shaft 95 at a predetermined position, which is close to one end portion (left end portion in FIG. 2) of the second transmission shaft 95. The pinion 36 is coaxially fixed to the second transmission shaft 95 at a predetermined position, which is close to the other end portion (right end portion in FIG. 2) of the second transmission shaft 95. Note that the second gear 81 is formed so as to be larger in diameter than both the first gear 56 and the pinion 36.

The one end portion (left end portion in FIG. 2) of the second transmission shaft 95 is supported by a rolling bearing 96 fixed to the housing 22. An inner ring of the rolling bearing 96 is fixedly fitted to the outer periphery of the one end portion (left end portion in FIG. 2) of the second transmission shaft 95. In addition, an outer ring of the rolling bearing 96 is fixed within a recess 97 having a circular cross section and formed in the inner surface of the lid 27. In addition, the other end portion (right end portion in FIG. 2) of the second transmission shaft 95 is supported by a rolling bearing 84.

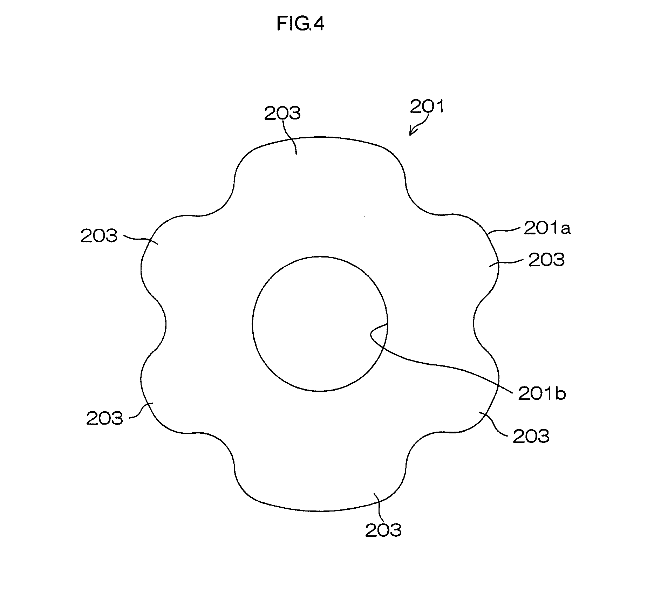

In addition, a resolver 200 (not shown in FIG. 2. See FIG. 3) is provided outside of the housing 22. The resolver 200 serves as rotational position detecting means for detecting the rotational position of the shift select shaft 15. Note that, in the first embodiment, the rotational position detecting device is formed of the resolver 200 and an ECU 88. FIG. 4 is a view that shows the configuration of a resolver rotor 201 when viewed in the direction indicated by the arrow IV in FIG. 3.

The resolver 200 includes the substantially cylindrical resolver rotor 201 and an annular resolver stator 202. The resolver rotor 201 is a detection rotor that is fixedly fitted to the outer periphery of the shift select shaft 15. The resolver stator 202 is a detecting unit that is arranged so as to surround the resolver rotor 201. The resolver rotor 201 and the resolver stator 202 are arranged so as to be concentric with the shift select shaft 15. Therefore, the axial directions, radial directions and circumferential directions of the shift select shaft 15, resolver stator 202 and resolver rotor 201 respectively coincide with one another.

The resolver 200 is, for example, a reluctance resolver, and is able to detect the rotation angle of the resolver rotor 201 relative to the resolver stator 202. That is, the resolver rotor 201 does not contact the resolver stator 202, so the rotational position of the shift select shaft 15 is detected by the resolver 200 in a noncontact state. The resolver rotor 201 is surrounded by the resolver stator 202 to form a magnetic circuit. Multiple protrusions 203 for detecting the rotational position, extending along the axial direction of the resolver rotor 201, are formed on an outer periphery 201a of the resolver rotor 201 so as to be aligned at substantially constant intervals in the circumferential direction. The entirety of the outer periphery 201a functions as a position detection region. An inner periphery 201b of the resolver rotor 201 is fixedly fitted to the outer periphery of the shift select shaft 15.

The resolver stator 202 is fixed to, for example, the first shaft holder 113 (see FIG. 2) of the housing 22 via a fixing jig (not shown). The resolver stator 202 has a plurality of cores around which coils are wound. The cores are arranged in the circumferential direction. The detection result output from the resolver stator 202 is input into the electronic control unit (ECU) 88 (Electronic Control Unit: an example of control means: a portion of rotational position detecting device). The ECU 88 detects the rotational position of the shift select shaft 15 on the basis of the detection result output from the resolver stator 202. The ECU 88 may be accommodated in the transmission actuating device 3 or may be provided in the transmission 2.

When a shift knob 93 of the vehicle is operated, a signal from an operation detecting sensor for the shift knob 93 is given to the ECU 88. The ECU 88 executes drive control over the electric motor 23 via a motor driver (not shown). In addition, the ECU 88 executes drive control over the first and second electromagnetic clutches 43 and 45 via a relay circuit (not shown).

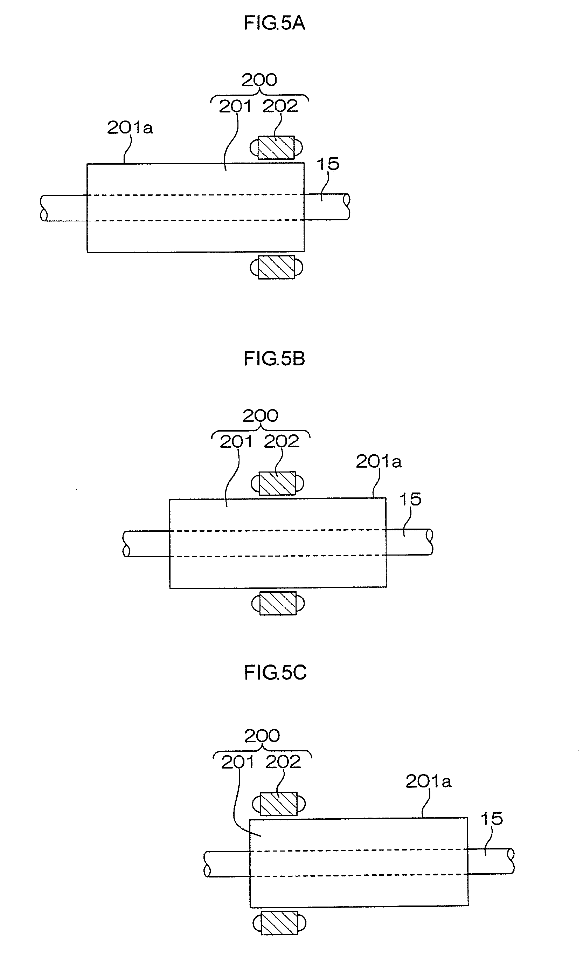

FIG. 5A to FIG. 5C are sectional views that schematically show the positional relationship between the resolver rotor 201 and the resolver stator 202. FIG. 5A shows the state where the shift select shaft 15 is placed at the first select position. FIG. 5B shows the state where the shift select shaft 15 is placed at the second select position. FIG. 5C shows the state where the shift select shaft 15 is placed at the third select position. The first, second and third select positions are aligned along the axial direction M4 of the shift select shaft 15. When the shift select shaft 15 is placed at the first select position, the amount by which the shift select shaft 15 projects from the housing 22 of the electric actuator 21 is greatest. On the other hand, when the shift select shaft 15 is placed at the third select position, the amount by which the shift select shaft 15 projects from the housing 22 of the electric actuator 21 is smallest. In addition, the second select position is an intermediate position between the first select position and the third select position. The resolver rotor 201 moves together with the shift select shaft 15 in the axial direction M4 of the shift select shaft 15.

Regardless of which of the first, second, and third select positions the shift select shaft 15 is placed at, the entire region of the inner periphery of the resolver stator 202 radially faces the outer periphery 201a of the resolver rotor 201. In other words, the resolver rotor 201 and the resolver stator 202 overlap with each other in the direction perpendicular to the axis 17. In addition, regardless of the position of the shift select shaft 15, the area of a portion of the outer periphery 201a of the resolver rotor 201, facing the inner periphery of the resolver stator 202, is constant. Therefore, the size of a portion of the outer periphery 201a of the resolver rotor 201, which forms the magnetic circuit, is also constant. Then, regardless of which of the select positions the shift select shaft 15 is placed at, it is possible to detect the rotation angle of the resolver rotor 201 relative to the resolver stator 202.

As described above, according to the first embodiment, the resolver rotor 201 is fixed to the shift select shaft 15, so the shift select shaft 15 and the resolver rotor 201 rotate together with each other. Thus, an offset in the rotation direction does not occur between the shift select shaft 15 and the resolver rotor 201. In addition, the substantially cylindrical resolver rotor 201 is formed so as to be long along the axial direction M4 of the shift select shaft 15. Therefore, regardless of which of the first, second, and third select positions the shift select shaft 15 is placed at, the entirety of the inner periphery of the resolver stator 202 faces the outer periphery 201 a of the resolver rotor 201. That is, regardless of which of the select positions the shift select shaft 15 is placed at, it is possible to detect the rotation angle of the resolver rotor 201 relative to the resolver stator 202. Thus, regardless of which of the select positions the shift select shaft 15 is placed at, it is possible to accurately detect the rotational position of the shift select shaft 15. Then, because the resolver 200 that is noncontact rotation angle detecting means is used, no backlash occurs between the shift select shaft 15 and the resolver 200. Therefore, it is possible to further highly accurately detect the rotational position of the shift select shaft 15. Thus, regardless of which of the select positions the shift select shaft 15 is placed at, the shift operation of the transmission 2 is performed with high accuracy.

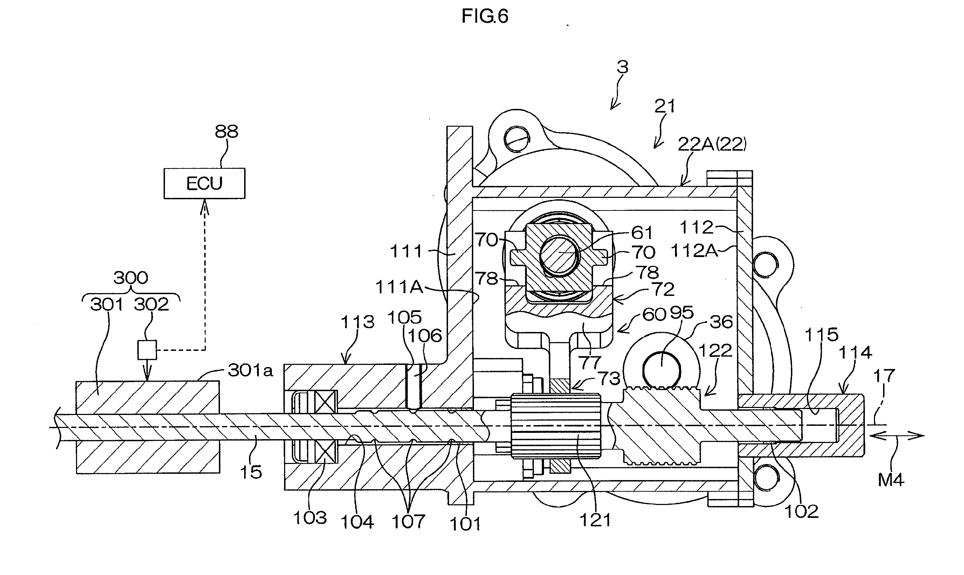

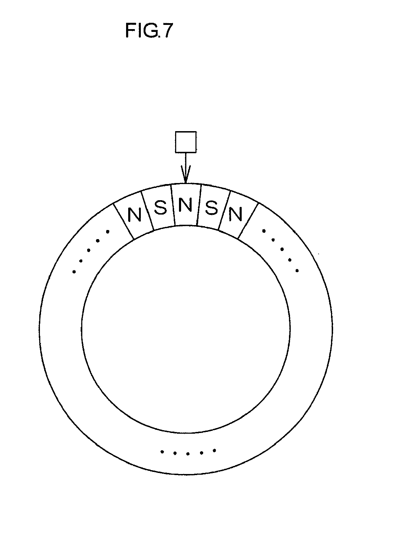

FIG. 6 is a sectional view that shows the configuration of main portions of a transmission apparatus in which a rotational position detecting device according to a second embodiment of the invention is incorporated. In the second embodiment, portions that are the same as those in FIGs. 1 to 4 and FIGs. 5A to 5C are denoted by the same reference numerals as those in FIGs. 1 to 4 and FIGs. 5A to 5C, and the description thereof is omitted. The second embodiment differs from the first embodiment shown in FIGs. 1 to 4 and FIGs. 5A to 5C in that a magnetic encoder device 300 is employed as rotational position detecting means. In the second embodiment, the rotational position detecting device is formed of the magnetic encoder device 300 and the ECU 88. FIG. 7 is a view that schematically shows the configuration of a main portion of the magnetic encoder device 300 shown in FIG. 6.

As shown in FIG. 6 and FIG. 7, the magnetic encoder device 300 includes a cylindrical magnetic body (magnetic body) 301 and a Hall element 302, and is arranged outside the housing 22 of the electric actuator 21. The cylindrical magnetic body (magnetic body) 301 is a detection rotor that is fixedly fitted to the outer periphery of the shift select shaft 15. The Hall element 302 is a magnetic field detecting element that is arranged on the radially outer side of the cylindrical magnetic body 301. The cylindrical magnetic body 301 is arranged so as to be concentric with the shift select shaft 15. As shown in FIG. 7, a plurality of (for example, two) north pole portions, each formed as a north pole through magnetization, and a plurality of (for example, two) south pole portions, each formed as a south pole through magnetization, are arranged in the cylindrical magnetic body 301 alternately in the circumferential direction. The circumferential length of each north pole portion is substantially equal to the circumferential length of each south pole portion. The Hall element 302 is arranged so as to face an outer periphery 301a of the cylindrical magnetic body 301 with a minute gap left between the Hall element 302 and the outer periphery 301a of the cylindrical magnetic body 301. As the cylindrical magnetic body 301 rotates around the axis 17, a change in magnetic field occurs in the stationary Hall element 302. The detection result output from the Hall element 302 is input into the ECU 88. The ECU 88 detects the rotational position of the shift select shaft 15 on the basis of the detection result output from the Hall element 302.

The cylindrical magnetic body 301 moves together with the shift select shaft 15 as the shift select shaft 15 moves in the axial direction M4. Regardless of which of the first, second, and third select positions the shift select shaft 15 is placed at, the Hall element 302 radially faces the outer periphery 301a of the cylindrical magnetic body 301. In other words, the cylindrical magnetic body 301 and the Hall element 302 overlap with each other in the direction perpendicular to the axis 17. Therefore, regardless of which of the select positions the shift select shaft 15 is placed at, it is possible to detect the rotation angle of the cylindrical magnetic body 301 relative to the Hall element 302.

As described above, according to the second embodiment, the cylindrical magnetic body 301 is fixed to the shift select shaft 15, so the shift select shaft 15 and the cylindrical magnetic body 301 rotate together with each other. Thus, an offset in the rotation direction does not occur between the shift select shaft 15 and the cylindrical magnetic body 301. In addition, the substantially cylindrical magnetic body 301 is formed so as to be long along the axial direction M4 of the shift select shaft 15. Therefore, regardless of which of the first, second, and third select positions the shift select shaft 15 is placed at, the entirety of the inner periphery of the Hall element 302 faces the outer periphery 301a of the cylindrical magnetic body 301. That is, regardless of which of the select positions the shift select shaft 15 is placed at, it is possible to detect the rotation angle of the cylindrical magnetic body 301 relative to the Hall element 302. Thus, regardless of which of the select positions the shift select shaft 15 is placed at, it is possible to accurately detect the rotational position of the shift select shaft 15. Further, because the magnetic encoder device 300 that is noncontact rotation angle detecting means is used, no backlash occurs between the shift select shaft 15 and the magnetic encoder device 300. Therefore, it is possible to further highly accurately detect the rotational position of the shift select shaft 15. Thus, regardless of which of the select positions the shift select shaft 15 is placed at, the shift operation of the transmission 2 is achieved with high accuracy.

While the two embodiments of the invention have been described, the invention may be implemented in various other embodiments.
In the above embodiments, the resolver stator 202 and the Hall element 302 are fixedly supported by the housing 22. Alternatively, the resolver stator 202 and the Hall element 302 may be fixedly supported by another fixing member.

In the above embodiments, the resolver 200 and the magnetic encoder device 300 are arranged outside of the housing 22 of the electric actuator 21. Alternatively, the resolver 200 and the magnetic encoder device 300 may be accommodated in the housing 22 of the electric actuator 21. Other than the above, various design changes may be provided within the scope of the invention described in the claims.

With the above configuration, regardless of which of the select positions the shift select shaft is placed at, it is possible to perform the shift operation of the transmission with high accuracy.
The rotational position of a shift select shaft is detected by a resolver. The resolver includes a substantially cylindrical resolver rotor that is fixedly fitted to the outer periphery of the shift select shaft, and an annular resolver stator that is arranged so as to surround the resolver rotor. The resolver rotor and the resolver stator are arranged so as to be concentric with the shift select shaft. Regardless of which of first, second third select positions the shift select shaft is placed at, the entirety of the inner periphery of the resolver stator radially faces the outer periphery of the resolver rotor.

## Claims

1. A rotational position detecting device (200, 88; 300, 88) that detects a rotational position of a shift select shaft (15) that has an axis (17), that rotates about the axis (17) to perform shift operation and that moves, in an axial direction of the shift select shaft (15), between a plurality of select positions to perform select operation, **characterized by** comprising:
an annular detection rotor (201; 301) that is fixedly fitted to an outer periphery of the shift select shaft (15); and
a detecting unit (202; 302) that is fixedly held by a fixing member, at a position on a radially outer side of the detection rotor (201; 301), wherein
one of the detection rotor (201; 301) and the detecting unit is formed so as to be long along the axial direction of the shift select shaft (15) such that the detection rotor (201; 301) and the detecting unit (202; 302) overlap with each other in a direction perpendicular to the axis (17) regardless of which of the select positions the shift select shaft (15) is placed at, and
an angle of rotation of the detection rotor (201; 301) relative to the detecting unit (202; 302) is detected.

2. The rotational position detecting device (200, 88; 300, 88) according to claim 1, wherein the detection rotor (201; 301) includes a cylindrical resolver rotor (201), and the detecting unit (202; 302) includes an annular resolver stator (202) that surrounds an outer periphery of the resolver rotor (201).

3. The rotational position detecting device (200, 88; 300, 88) according to claim 1, wherein the detection rotor (201; 301) includes a cylindrical magnetic body (301), and the detecting unit includes a Hall element (302).

4. A transmission actuating device (3), **characterized by** comprising:
a shift select shaft (15) that has an axis (17), that is provided so as to be rotatable about the axis (17), and that moves, in an axial direction of the shift select shaft (15), between a plurality of select positions to perform select operation;
the rotational position detecting device (200, 88; 300, 88) according to any one of claims 1 to 3; and
control means (88) for controlling rotation of the shift select shaft (15) based on the rotational position of the shift select shaft (15), detected by the rotational position detecting device (200, 88; 300, 88).
